# EUROPÄISCHE PATENTSCHRIFT

(11) **EP 2 697 702 B1**
(45) Veröffentlichungstag und Bekanntmachung des Hinweises auf die Patenterteilung: **12.08.2015**
(21) Anmeldenummer: 12717233.6
(22) Anmeldetag: 30.03.2012
(51) Int. Cl.: G05B 19/042

(54) **VORRICHTUNG UND VERFAHREN ZUR GESTENSTEUERUNG EINES BILDSCHIRMS IN EINER LEITWARTE**
DEVICE AND METHOD FOR THE GESTURE CONTROL OF A SCREEN IN A CONTROL ROOM
DISPOSITIF ET PROCÉDÉ DE COMMANDE GESTUELLE D'UN ÉCRAN DE VISUALISATION DANS UNE SALLE DE CONTRÔLE

(30) Priorität: 15.04.2011 DE 102011017305
(43) Veröffentlichungstag der Anmeldung: 19.02.2014
(73) Patentinhaber: ABB Technology AG, 8050 Zürich (CH)
(72) Erfinder: DOPPELHAMER, Jens, 68526 Ladenburg (DE); HUSOY, Kristoffer, N-1152 Oslo (NO); HOLLENDER, Martin, 69221 Dossenheim (DE); RISSANEN, Mikko, 564596 SINGAPORE (SG); ENKERUD, Torgeir, N-0575 Oslo (NO)
(74) Vertreter: Kock, Ina
(86) Internationale Anmeldenummer: PCT/EP2012/055862
(87) Internationale Veröffentlichungsnummer: WO 2012/139906

(56) Entgegenhaltungen:
- WO-A2-2010/138743
- DE-A1- 19 918 072
- ACM, 2 PENN PLAZA, SUITE 701 - NEW YORK USA, 6. Oktober 2005 (2005-10-06), XP040027394,

## Beschreibung

Die Erfindung betrifft ein Bedien- und Beobachtungssystem und ein Verfahren zur Bedienung von Komponenten und zur Darstellung von Messwerten, Prozessgrößen und/oder Zustandsmeldungen der Komponenten einer technischen Anlage oder eines technischen Prozesses und ist insbesondere geeignet zur Bedienung und Darstellung von Prozessabläufen in der Leitwarte einer großtechnischen Anlage, beispielsweise einer Öl- und Gasplattform, einer Raffinerie oder einer Kraftwerksanlage.

Gegenwärtig eingesetzte Bedien- und Überwachungssysteme, in technischen Anlagen auch als Leitsysteme bezeichnet, sind wichtiges Hilfsmittel für das Betriebspersonal, um Anlagen- oder Prozesszustände zu erkennen und die Anlage oder den Prozess zu steuern. Derartige Leitsysteme umfassen üblicherweise einen oder mehrere Großbildschirme zur Darstellung, beispielsweise einer Übersicht des Gesamtprozesses oder der Gesamtanlage, und eine Vielzahl von Bedienarbeitsplätzen, üblicherweise mit Tastatur und Maus. Die Bedienarbeitsplätze haben jeweils eine spezifische Aufgabe bei der Überwachung und Steuerung der Anlagenprozesse, beispielsweise die Überwachung und Steuerung einzelner Komponenten oder Teilprozesse, die Erfassung bestimmter Prozessparameter oder die Verwaltung und Steuerung der anfallenden Datenströme.

Die Bedienarbeitsplätze tauschen dabei situations- und zustandsabhängig eine Vielzahl von Daten miteinander und mit dem Großbildschirm aus. Die Darstellung des Prozesses bzw. der Anlage auf dem Großbildschirm kann auch über ausgewählte Bedienarbeitsplätze gesteuert bzw. geändert werden. Sobald jedoch der Operator einen Bedienarbeitsplatz verlässt, über welchen die Anzeige am Großbildschirm beeinflussbar ist, beispielsweise wenn in Störsituationen oder bei der Auswertung komplexer Informationen mehrere Experten effektiv zusammenarbeiten müssen, kann der Inhalt der Großbildschirme von dieser entfernten Position nicht mehr verändert werden. Dies führt zu einer starken Einschränkung bezüglich der Anlagensteuerung oder Prozessführung.

In der DE 199 18 072 A1 wird beschrieben, dass ein auf einem Anzeigeschirm dargestellter Bereich mit Hilfe eines Zeigeobjekts, bevorzugt der menschlichen Hand, ausgewählt wird, indem die Auswahl anhand der räumlichen Zeigerichtung der Hand erfolgt. Der Anzeigeschirm dient dabei der Darstellung leittechnischer Prozesse eines Kraftwerks. Zur Ermittlung der räumlichen Zeigerichtung sind mindestens zwei Detektoren vorgesehen. Außerdem kann eine Gestenerkennung vorgesehen sein, um eine der Geste zugeordnete Funktion auszulösen. Die Geste kann beispielsweise eine Betätigungsgeste zum Auslösen eines Prozessbefehls sein.

Die Bedienung eines technischen Systems mittels Gestenerkennung wird außerdem beschrieben in Chen et al: "A study of manual gesture-based selection for the PEMMI multimodel transport management interface", ICMI'05, Oktober 4-6, 2005, Trento, Italien, und in WO 2010/138743 A2.

Inzwischen gibt es preiswerte Sensoren, die mit Hilfe von mehreren Kameras ein Bewegungsmodell der Benutzer im Raum aufbauen können. Über dieses Modell, das wahlweise um eine Gesichtserkennung ergänzt werden kann, ist auch eine Identifikation von Benutzern möglich. Weiterhin können die Sensoren Gesten erkennen. Bisher werden solche Sensoren für Computerspiele eingesetzt.

Der Erfindung liegt demgemäß die Aufgabe zugrunde, ein Bedien- und Beobachtungssystem und ein Verfahren zur Bedienung von Komponenten und zur Darstellung von Messwerten, Prozessgrößen und/oder Zustandsmeldungen der Komponenten einer technischen Anlage oder eines technischen Prozesses anzugeben, wodurch vorgenannte Nachteile des Standes der Technik überwunden werden und welches insbesondere zur übersichtlichen und einfachen Darstellung und Bedienung einer großtechnischen Anlage oder Prozesses geeignet ist, insbesondere wenn sich die Bediener der Anlage entfernt von ihren Bedienarbeitsplätzen befinden, um in Störsituationen oder bei der Auswertung komplexer Informationen effektiv zusammenzuarbeiten oder Erfahrungen auszutauschen.

Diese Aufgabe wird erfindungsgemäß durch ein Bedien- und Beobachtungssystem mit den in Anspruch 1 angegebenen Merkmalen gelöst. Vorteilhafte Ausgestaltungen, Verbesserungen des erfindungsgemäßen Bedien- und Beobachtungssystems und ein entsprechendes Verfahren sind in weiteren Ansprüchen und in der Beschreibung angegeben.

Das erfindungsgemäße Bedien- und Beobachtungssystem umfasst wenigstens einen Großbildschirm zur Darstellung der Komponenten, Messwerte, Prozessgrößen und/oder Zustandsmeldungen der Komponenten der Anlage bzw. des Prozesses des technischen Prozesses oder der technischen Anlage und eine Vielzahl von Bedienarbeitsplätzen.

Erfindungsgemäß ist auf einem übergeordnetem Bildschirm, auch als Leitbildschirm bezeichnet, der beispielsweise als Großbildschirm ausgeführt sein kann, und den Bedienarbeitsplätzen des Bedien- und Beobachtungssystem eine Bewegungserkennungsund Bewegungssteuerungssoftware installiert, welche eine Bedienung und/oder Abfrage der Komponenten, der Messwerten, der Prozessgrößen und/oder Zustandsmeldungen der Komponenten der technischen Anlage oder des technischen Prozesses mittels einer Körperbewegung des Bedieners ermöglicht. Dazu sind ausgewählte Komponenten, Messwerte, Prozessgrößen und/oder der Zustandsmeldungen der Komponenten der Anlage bzw. des Prozesses als durch Gestik, vorzugsweise Handbewegungen, bedienbare Objekte dargestellt, die durch Bewegungsabläufe eines Menschen steuerbar sind.

Die Software weist ein Positionserkennungsmodul auf, das die Position der einzelnen Bediener der Anlage innerhalb der Leitwarte bestimmt. In einem ersten Schritt wird mittels einer Geste des Bedieners auf ein Objekt, beispielsweise ein Pumpensymbol, gezeigt. In einem zweiten Schritt wird eine Rückmeldung erzeugt, dass die Selektion des Objektes erfolgt ist, beispielweise indem der Hintergrund hinter dem Symbol umgefärbt wird. Optional kann diese Selektion durch eine weitere Geste bestätigt werden, was wiederum zurückgemeldet wird, indem beispielsweise der Hintergrund nochmals umgefärbt wird.

In einem weiteren Schritt wird nun die Aktion ausgewählt, die auf das selektierte Objekt angewendet werden soll. Dies kann entweder über eine spezielle Geste erfolgen: beispielsweise können Gesten definiert werden, welche die zum Objekt gehörenden Meldungen, Trends oder Videobilder ausschalten. Oder es wird mit einer weiteren Geste ein vordefinierter Zielbereich selektiert, beispielsweise ein Bildschirm mit einer Alarmund Meldungsliste, die dann speziell die zu dem Objekt gehörenden Meldungen anzeigt. Dies kann sich für den Operator so anmuten, als ob er Objekte zwischen verschiedenen Bildschirmen hin und herschieben kann. In einer Ausgestaltung des erfindungsgemäßen Bedien- und Beobachtungssystem ist vorgesehen, dass der Bediener Gesten auf reale Gegenstände bezieht. Beispielsweise quittiert der Bediener durch eine spezielle Geste auf eine Alarmhupe einen akustischen Alarm. Durch eine weitere Geste auf einen Besprechungstisch sind spezielle Sichten auf den Großbildschirmen aufschaltbar, die eine Schichtleiterbesprechung besonders unterstützen. Verschiebt er das Telefon auf den Lautsprecher, so wird das Telefon auf Konferenzmodus geschaltet. Dazu sind die realen Gegenstände mit Aufnahme- und Verarbeitungsmodulen, beispielsweise mit Sensoren, versehen, welche die entsprechenden Gesten aufnehmen, verarbeiten und zur Bewegungserkennungs- und Bewegungssteuerungssoftware zur weiteren Verarbeitung übertragen.

Weiterhin ist wenigstens eine Aufnahmeeinheit zur Aufnahme von Bewegungen vorgesehen, welche in der Lage ist definierte Bewegungen und Gestiken eines Bedieners aufzunehmen, in ein Signal, im Folgenden auch als Bewegungssignal bezeichnet, umzuwandeln und dieses Bewegungssignal der auf dem Bildschirm und den Bedienarbeitsplätzen installierten Software zur weiteren Verarbeitung bereitzustellen. Dadurch wird in vorteilhafter Weise eine Navigation durch die technische Anlage oder den technischen Prozess mittels einer Bewegung des Anlagenbedieners ermöglicht. Die Aufnahmeeinheit ist üblicherweise dort angeordnet, wo die Bediener eine optimale Übersicht auf die Gesamtanlage oder den Gesamtprozess haben, vorzugsweise in der Nähe bzw. im Umfeld des Großbildschirmes.

Dadurch wird ermöglicht, dass Bediener der Anlage die zuvor über Tastatur und Maus ausführbaren Funktionen des Bedien- und Beobachtungssystem nunmehr durch ihre Bewegung steuern. Auf dem Bildschirm und den Bedienarbeitsplätzen ist dazu die Software zur Bewegungserkennung und -steuerung installiert.

Somit müssen sich die Bediener nicht mehr direkt vor den Bildschirmen ihrer jeweiligen Bedienarbeitsplätze aufhalten sondern können auch direkt vor dem Großbildschirm navigieren. Weitere Vorteile, die sich aus der Bewegungsnavigation, vorzugsweise am Großbildschirm ergeben, sind die Reduzierung der monotonen und bewegungsarmen Arbeit des Anlagenbedieners am eigenen Bildschirmarbeitsplatz.

In einer Ausgestaltung kann wenigstens eine weitere Aufnahmeeinheit, beispielsweise ein Mikrofon, zur Aufnahme von Umgebungsgeräuschen, vorzugsweise der menschlichen Stimme, vorgesehen sein. Die weitere Aufnahmeeinheit verfügt über eine Vorrichtung zur Aufnahme von gesprochenen Worten und eine daran angeschlossene Verarbeitungseinheit, welche aus der Aufnahme der gesprochenen Worte ein weiteres Signal erzeugt mit dem, wie vorab beschrieben, eine Bedienung und/oder Abfrage der Komponenten, der Messwerten, der Prozessgrößen und/oder der Zustandsmeldungen der Komponenten der technischen Anlage oder des technischen Prozesses ausführbar ist.

Erfindungsgemäß ist auf dem Bildschirm und den Bedienarbeitsplätzen des Bedienund Beobachtungssystem dazu eine Spracherkennungssoftware installiert, welche eine Bedienung und/oder Abfrage der Komponenten, der Messwerten, der Prozessgrößen und/oder der Zustandsmeldungen der Komponenten der technischen Anlage oder des technischen Prozesses mittels gesprochener Worte des Bedieners ermöglicht. Dazu sind ausgewählte Komponenten, Messwerten, Prozessgrößen und/oder der Zustandsmeldungen der Komponenten der Anlage bzw. des Prozesses als durch Sprache, vorzugsweise gesprochene Befehle, bedienbare Objekte dargestellt, die durch Geräusche der menschlichen Sprache steuerbar sind.

Die vorgesehene Bewegungserkennungs- und Bewegungssteuerungssoftware ermöglicht den Bedienern der technischen Anlage in vorteilhafter Weise eine freie Bewegung in der Leitwarte und ein freies Navigieren auf den Großbildschirmen von einer beliebigen Position innerhalb der Leitwarte aus.

Dazu ist erfindungsgemäß ein Modell vorgesehen, welches die Leitwarte zeigt und abbildet, welches Gerät (Bildschirme, Tische, Telefone, Alarmhupen etc.) sich wo innerhalb der Leitwarte befindet. Ein solches Modell kann beispielsweise mit einem CAD-Programm erstellt werden. Das Modell ist dafür eingerichtet die Beziehungen zwischen den Gesten den realen Gegenständen mittels der Gestensteuerung darzustellen und die Gesten auf bestimmte Bildschirme und/oder reale Gegenstände bereitzustellen. So wird es beispielsweise möglich, ein Symbol zwischen zwei verschiedenen Bedienplätzen oder Computersystemen hin und her zu ziehen oder sogar reale Gegenstände, wie beispielsweise ein Telefon, in die Navigation mit einzubeziehen.

Mit Hilfe des Modells erkennt die Gestensteuerung auf welches Zielsystem sich eine Geste bezieht. Die Gestensteuerung sendet Selektions- und Positionsinformation an das erkannte Zielsystem. Das Zielsystem wertet die empfangene Information aus und löst entsprechende Aktionen aus (beispielsweise die Visualisierung einer Selektion) und sendet als Antwort entsprechende Informationen zurück (beispielsweise welche Pumpe selektiert wurde).

In einer Ausgestaltung des erfindungsgemäßen Systems ist die Gestensteuerung als übergeordnete oder zentrale Gestensteuerung ausgestaltet und leitet die zurückgemeldeten Informationen an andere Systeme weiter. Falls ein Sensor zur Gestensteuerung die gesamte Leitwarte nicht ausreichend abdeckt, so können auch mehrere Sensoren zentral koordiniert werden.

Gegenüber der aus dem Spielebereich bekannten Gestensteuerungssystemen ist das erfindungsgemäße Bedien- und Beobachtungssystem in vorteilhafter Weise so ausgestaltet, dass die Gestensteuerung für Leitwarten in der Lage ist, mehrere voneinander unabhängige Computersysteme zu koordinieren und dazu ein detailliertes Modell der Umwelt, beispielsweise der realen Gegenstände, die innerhalb der Leitwarte angeordnet sind, verwendet.

Das Verfahren, mit dem die Aufgabe weiterhin gelöst wird, beruht darauf, dass zur Bedienung und Beobachtung von Komponenten und zur Darstellung von Messwerten, Prozessgrößen und/oder Zustandsmeldungen der Komponenten einer technischen Anlage oder eines technischen Prozesses auf wenigstens einem Großbildschirm und einer Vielzahl von Bedienarbeitsplätzen die Komponenten, Messwerte, Prozessgrößen und/oder Zustandsmeldungen der Komponenten des technischen Prozesses oder der technischen Anlage dargestellt werden. Erfindungsgemäß wird auf dem Bildschirm und den Bedienarbeitsplätzen eine Bewegungserkennungssoftware installiert, mit der eine Bedienung und/oder Abfrage der Komponenten, der Messwerte, der Prozessgrößen und/oder der Zustandsmeldungen der Komponenten der technischen Anlage oder des technischen Prozesses mittels einer Körperbewegung eines Bedieners ausgeführt wird.

Ausgewählte Komponenten, Messwerte, Prozessgrößen und/oder Zustandsmeldungen der Komponenten der Anlage oder des Prozesses werden als durch Gestik bedienbare Objekte dargestellt, die durch Bewegungsabläufe eines Bedieners gesteuert werden.

Mittels einer Aufnahmeeinheit werden vorab definierte Bewegungen und Gestiken eines Bedieners aufgenommen, in ein Bewegungssignal umwandelt und das Bewegungssignal wird der auf dem Bildschirm und den Bedienarbeitsplätzen installierten Software zur weiteren Verarbeitung bereitstellt.

Eine typische Navigationsaufgabe, welche der Bediener mit dem erfindungsgemäßen Bedien- und Beobachtungssystem der technischen Anlage oder des technischen Prozesses ausführt, beruht auf einer Selektion von Detailinformationen, die beispielsweise aus einem am Großbildschirm dargestellten Übersichtsbild aus einer Vielzahl von dort dargestellten Komponenten oder Objekten, wie beispielsweise Messwerte, Prozessgrößen und/oder der Zustandsmeldungen der Komponenten, auswählen lassen. Beispielsweise kann eine spezielle Trenddarstellung einer Prozessvariablen aus einer oft in die Tausende gehende Anzahl von darstellbaren Prozessvariablen ausgewählt werden.

Dazu wird am Großbildschirm oder auch an ausgewählten Bildschirmen der Bedienarbeitsplätze eine Anzahl von Navigationsfenstern eingerichtet, welche mittels einer vorab definierten Gestik bedienbar sind. Die Navigationsfenster erlauben dabei mittels einer hinterlegten hierarchischen Struktur der Komponenten der Anlage oder des Prozesses in unterlegte Teilbereiche hineinzunavigieren. Beispielsweise ist vorgesehen mittels verschiedener Gesten oder Handbewegungen von einem Übersichtsbild eines Kraftwerkes zuerst in sogenannte Bereichsbilder, die beispielsweise die Turbinenregelung, das Speisewassersystem oder auch das Kondensatsystem aufzeigen in sogenannte Detailbilder, die einzelne Antriebe oder Messwerte zeigen, einfacher Weise zu navigieren, um so dort dargestellte Detailinformationen abzurufen oder die dort sichtbaren Komponenten mittels einer Bewegung des Bedieners zu steuern.

Der Verfahrensablauf für die Navigation durch die verschiedenen Bereichs- und Detailbilder der Anlage oder des Prozesses kann nach folgendem bewegungsgesteuerten Schema ablaufen:
- Blättern in den Navigationsfenstern am Bildschirm eines ausgewählten Bedienarbeitsplatzes bis zum interessierenden Detailbild mittels einer ersten Geste, beispielsweise einer ersten Handbewegung.
- Auswahl der auf dem Detailbild dargestellten Komponente mittels einer zweiten Geste, beispielsweise einer zweiten Handbewegung.
- Die ausgewählte Komponente wird automatisch auf dem Übersichtsbild auf dem Großbildschirm dargestellt.

Der Bediener kann somit in vorteilhafter Weise an einer Bedienstation ein bestimmtes Objekt oder eine bestimmte Komponente herausgreifen, welche durch eine bestimmte Bewegung des Bedieners mittels der installierten Bewegungssoftware zu einer Darstellung des herausgegriffenen Objektes bzw. der herausgegriffenen Komponente auf dem Großbildschirm führt. Der Verfahrensablauf ist auch in umgekehrter Reihenfolge ausführbar. Dabei wird vom Bediener mittels einer vorab definierten Geste am Großbildschirm ein bestimmtes Objekt oder eine bestimmte Komponente herausgegriffen, welche durch eine bestimmte Bewegung des Bedieners mittels der installierten Bewegungssoftware zu einer Darstellung des herausgegriffenen Objektes bzw. der herausgegriffenen Komponente auf einer Bedienstation führt.

In einer Ausführungsform des erfindungsgemäßen Bedien- und Beobachtungssystems ist weiterhin vorgesehen mittels der installierten Bewegungssoftware vom auf dem Großbildschirm dargestellten Übersichtsbild oder dargestellten Bereichsbildern beispielsweise in die Detailbilder auf den einzelnen Bedienarbeitsplätzen zu navigieren.

Ein Beispiel hierfür ist folgender Verfahrensablauf. Der Bediener deutet mit seiner Hand auf einen Bereich oder ein Objekt auf dem Großbildschirm. Die installierte Software bewirkt, dass die zum ausgewählten Bereich oder zum ausgewählten Objekt zugehörige Prozessgrafik, beispielsweise eine Trendanzeige oder zugehörige Alarmmeldungen, auf einem ausgewählten Bedienarbeitsplatz in einem zuvor festgelegten Detailbild oder einem zuvor festgelegten Objekt des Prozesses oder der Anlage gezeigt wird. Die dazu notwendigen Verknüpfungen zwischen der Darstellung auf dem Großbildschirm und den Darstellungen auf den Bedienarbeitsplätzen sind in der installierten Software abgelegt.

Auch ist mit dem erfindungsgemäßen Bedien- und Beobachtungssystem vorgesehen nach einer Auswahl einer bestimmten Komponente auf dem Übersichtsbild des Großbildschirmes mittels einer Geste, beispielsweise der Greifbewegung, unter Verwendung der in der installierten Software programmierbaren Verknüpfungen zwischen dem Großbildschirm und den Bedienarbeitsplätzen ein Bedienfenster auf einem ausgewählten Bedienarbeitsplatz zu öffnen und eine Komponente, beispielsweise einen Motor, eine Pumpe oder ein Ventil, zu bedienen, den Sollwert eines Reglers zu beeinflussen, zwischen Hand- und Automatikbedienung umzuschalten oder einen in einen kritischen Zustand fahrenden Prozess zu unterbrechen.

Weiterhin ist die auf dem erfindungsgemäßen Bedien- und Beobachtungssystem installierte Bewegungssoftware auch in der Lage, nicht nur hintereinander ausgeführte Bewegungen zu verarbeiten, sondern auch gleichzeitig ausgeführte Bewegungsabläufe zur Bedienung und/oder Abfrage der Komponenten der technischen Anlage oder des technischen Prozesses zu verarbeiten. Ein Beispiel hierfür ist eine sogenannte Zweihandbedienung. Dabei wird mit der einen Hand auf die auszuwählende Komponente gezeigt und mit der anderen Hand diese Komponente betätigt.

In einer weiteren vorteilhaften Ausführungsform des erfindungsgemäßen Bedien- und Beobachtungssystems weist dieses eine zusätzliche Gesichts- und Bewegungserkennungsfunktionalität auf, die in der Lage ist zu erkennen, welche und wieviele Bediener sich im Leitstand der Anlage aufhalten und wo sich diese innerhalb des Raumes befinden bzw. wann die Bediener die Anlage betreten oder verlassen haben. Dazu kann eine Zugangskontrolle, beispielsweise am Eingang des Raumes vorgesehen sein, die mit der Bewegungssoftware des Bedien- und Beobachtungssystems gekoppelt ist und entsprechende Signale mit dem System austauscht. Dazu ist das Bedien- und Beobachtungssystem in einer besonderen Ausführungsform mit einer Anzeigevorrichtung ausgestattet, welche entsprechende Informationen über Identität, Anzahl und den Aufenthaltsort der Bediener innerhalb des Raumes beispielsweise in einem auf dem Großbildschirm und/oder den Bedienarbeitsplätzen vorgesehenen Fenster anzeigt.

In einer vorteilhaften Ausführung der Erfindung ist vorgesehen, dass der Abstand der sich am nächsten zum Großbildschirm befindlichen Person bzw. des Bedieners erfasst wird und je nach Größe des Abstands der am nächsten zum Großbildschirm befindlichen Person die Anzeige des Großbildschirmes optimiert wird, beispielsweise durch Auswahl der Fontgröße und des Detaillierungsgrades der Darstellung auf dem Bildschirm.

In einer weiteren vorteilhaften Ausgestaltung der Erfindung ist vorgesehen, dass die Bewegungserkennungssoftware ein Signal oder einen Impuls generiert, wenn über einen vorab festgelegten Zeitraum keine Bewegung registriert wird. Durch diesen Impuls kann beispielsweise eine Hupe ausgelöst werden und/oder der Bediener aufgefordert werden, eine bestimmte Eingabe zu tätigen. Somit kann sichergestellt werden, dass der Bediener nicht einschläft.

In vorteilhafter Weise sind die Bewegungssoftware und/oder die Spracherkennungssoftware mit speziellen Filtersystemen ausgestattet, die nur vorab festgelegte Gesten und/oder gesprochene Befehle an das Bedien- und Beobachtungssystem zur weiteren Verarbeitung übertragen. Dadurch wird verhindert, dass beispielsweise Unterhaltungen zwischen den Bedienern, die oft auch mit Gestiken unterlegt sind nicht zu einer unkontrollierten Bedienung oder Abfrage der Anlage oder des Prozesses führen.

Anhand des in den folgenden Figuren dargestellten Ausführungsbeispiele sollen die Erfindung sowie vorteilhafte Ausgestaltungen, Verbesserungen und weitere Vorteile der Erfindung näher erläutert und beschrieben werden.

Es zeigen:
- **Fig.** 1: ein Beispiel des erfindungsgemäßen Bedien- und Beobachtungssystems eines Kraftwerkes, und
- **Fig.** 2: eine besondere vorteilhafte Ausgestaltung des erfindungsgemäßen Bedien- und Beobachtungssystems.

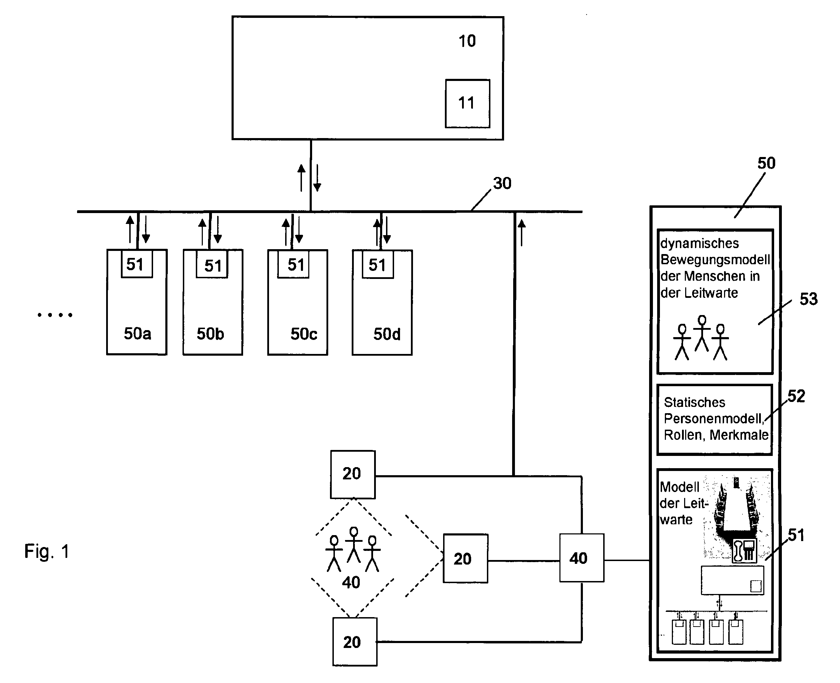

**Fig.** 1 zeigt ein beispielhaftes Bedien- und Beobachtungssystem eines Kraftwerkes zur Darstellung der Komponenten, Messwerte, Prozessgrößen und/oder Zustandsmeldungen der Komponenten des Kraftwerkes mit einer Vielzahl von Bedienarbeitsplätzen 50a, 50b, 50c, 50d die über ein Bussystem 30 mit einem Großbildschirm 10 verbunden sind.

Auf dem Großbildschirm 10 ist ein Übersichtsbild des Kraftwerkes mit entsprechenden Anwahlpunkten in die verschiedenen Teilbereiche des Kraftwerksprozesses dargestellt.

Erfindungsgemäß ist auf dem Großbildschirm 10 und den Bedienarbeitsplätzen 50a, 50b, 50c, 50d des erfindungsgemäßen Bedien- und Beobachtungssystem eine Bewegungserkennungssoftware 11, 51 installiert, welche eine Bedienung und/oder Abfrage der Komponenten, der Messwerte, der Prozessgrößen und/oder der Zustandsmeldungen der Komponenten des Kraftwerkes mittels einer Körperbewegung wenigstens eines Bedieners 40 ermöglicht.

Dazu sind ausgewählte Komponenten, Messwerte, Prozessgrößen und/oder Zustandsmeldungen der Komponenten als durch Gestik, vorzugsweise Handbewegungen, bedienbare Objekte dargestellt, die durch Bewegungsabläufe eines Menschen 40 steuerbar sind.

Mittels einer ebenfalls an das Bussystem 30 angeschlossenen Aufnahmeeinheit, einer Kamera 20, werden vorab definierte Bewegungsabläufe der Bediener 40 aufgenommen und in ein Bewegungssignal umgewandelt, welches dann über das Bussystem 30 zu den Bildschirmarbeitsplätzen 50a, 50b, 50c, 50d und dem Großbildschirm 10 zur weiteren Verarbeitung mittels der Bewegungserkennungssoftware 11, 51 übertragen wird.

In einer vorteilhaften Ausgestaltung sind Sensoren vorgesehen, die mit Hilfe von mehreren der Kameras 20 ein Bewegungsmodell der Benutzer im Raum aufbauen. Über dieses Modell, das wahlweise um eine Gesichtserkennung ergänzt werden kann, ist auch eine Identifikation von Benutzern möglich. Weiterhin können die Sensoren Gesten erkennen.

Mit Hilfe des Modells 50 erkennt die Gestensteuerung auf welches Zielsystem sich eine Geste bezieht. Die Gestensteuerung sendet Selektions- und Positionsinformation an das erkannte Zielsystem. Das Zielsystem wertet die empfangene Information aus und löst entsprechende Aktionen aus (beispielsweise die Visualisierung einer Selektion) und sendet als Antwort entsprechende Informationen zurück (beispielsweise welche Pumpe selektiert wurde).

Weiterhin ist erfindungsgemäß ein Modell 50 vorgesehen, welches mittels einer ersten Komponente 51 die Leitwarte abbildet und zeigt, welches Gerät (Bildschirme, Tische, Telefone, Alarmhupen etc.) sich wo innerhalb der Leitwarte befindet.

Das Modell 50 weist optional eine zweite Komponente 52 auf, die ein statisches Personenmodell abbildet, in dem beispielsweise Identifizierungsmerkmale der Bediener der Leitwarte abgelegt sind.

Das Modell 50 weist optional eine weitere Komponente 53 auf, die ein dynamisches Bewegungsmodell abbildet, also ein Modell der Personen in der Leitwarte.

In einer Ausgestaltung des erfindungsgemäßen Systems ist die Gestensteuerung als übergeordnete oder zentrale Gestensteuerung ausgestaltet und leitet die zurückgemeldeten Informationen an andere Systeme weiter. Falls ein Sensor zur Gestensteuerung die gesamte Leitwarte nicht ausreichend abdeckt, so können auch mehrere Sensoren zentral koordiniert werden.

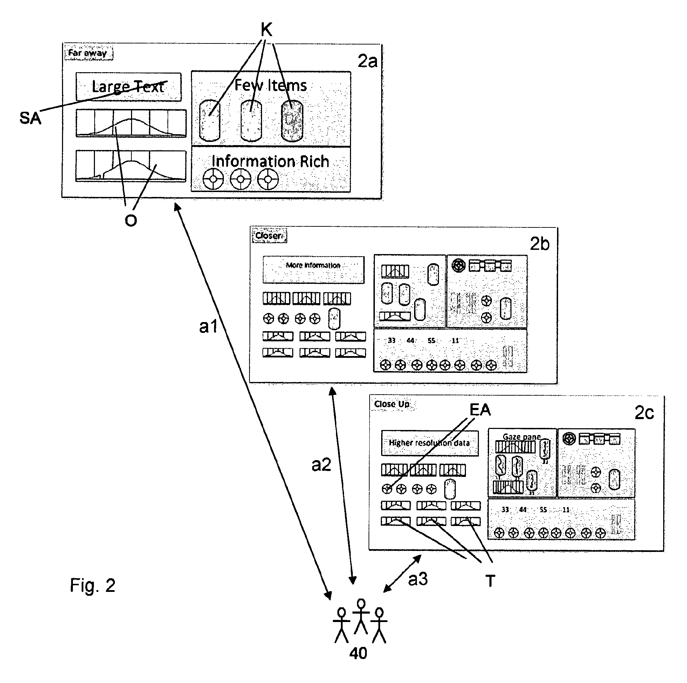

**Fig.** 2 zeigt eine besondere vorteilhafte Ausgestaltung des erfindungsgemäßen Bedienund Beobachtungssystems bei der sich die Darstellung von Komponenten und Objekten des Kraftwerkes auf dem Großbildschirm in Abhängigkeit von Standort des Bedieners verändert, also eine Anpassung des auf dem Bildschirm sichtbaren Inhaltes entsprechend der sich ändernden Distance des Bedieners vom Bildschirm erfolgt.

Die mit dem Bezugszeichen 2a gekennzeichnete Darstellungsform wird gewählt, wenn sich der Bediener in einem großen Abstand vor dem Bildschirm befindet. Es werden jetzt nur wenige Komponenten K und Objekte O dargestellt. Bewegt sich der Bediener weiter auf den Bildschirm zu, verringert sich der Abstand a1 zwischen dem Bildschirm und dem Bediener und es werden mittels dem Zusammenwirken von Bewegungserkennungssoftware 11, 51 und Aufnahmeeinheit 20 ab einem vorab definierten Abstand a2, a3 zum Bildschirm zuvor festgelegte Detailinformationen, wie beispielsweise verschiedene Trenddarstellungen T eines Messwertes oder eine Aufspaltung eines zuvor in der **Fig.** 2a dargestellten Sammelalarms SA in Einzelalarme EA, zu den bisher dargestellten Komponenten K und Objekten O geöffnet, was die Darstellungen 2b und 2c zeigen.

Der Verfahrensablauf ist nachfolgend am Beispiel des Objektes Pumpe dargestellt. Zunächst wird das Objekt "gefangen". Dazu wird zuerst auf das Pumpensymbol gezeigt und eine Rückmeldung geliefert, dass das Objekt "Pumpe" im Fokus ist. Danach erfolgt eine Selektion des Objektes Pumpe durch eine Geste, die auch sehr implizit sein kann. Im Folgenden wird eine Rückmeldung kreiert, dass das Objekt selektiert wurde.

In einem nachfolgenden Schritt wird das Objekt Pumpe benutzt, indem zuerst auf eine Zielaktion, beispielsweise eine Meldeliste gezeigt wird. Alternativ kann die Zielaktion auch durch eine spezifische Geste gewählt werden. Nach einer Anwendung der Zielaktion auf das zuvor gefangene Objekt, also der Darstellung der zu der Pumpe gehörenden Meldungen in der Meldeliste wird die Pumpe vom Übersichtsbild in die Meldungsliste gezogen.

## Patentansprüche

1. Bedien- und Beobachtungssystem einer technischen Anlage mit Gestensteuerung zur Bedienung von Komponenten der Anlage und zur Darstellung von Messwerten, Prozessgrößen und/oder Zustandsmeldungen der Komponenten der Anlage in einer Leitwarte, mit wenigstens einem Großbildschirm (10) und mit einer Vielzahl von Bedienarbeitsplätzen (50a-50d) zur Darstellung der Komponenten, Messwerte, Prozessgrößen und/oder Zustandsmeldungen, **dadurch gekennzeichnet, dass**
• Sensoren (20) vorgesehen sind, die Gesten erkennen,
• auf dem Großbildschirm und den Bedienarbeitsplätzen eine Bewegungserkennungs- und Bewegungssteuerungssoftware installiert ist, welche eine Bedienung und/oder Abfrage der Komponenten, der Messwerte, der Prozessgrößen und/oder der Zustandsmeldungen der Komponenten der Anlage mittels einer Geste eines Bedieners ermöglicht, indem sie
o ein Positionserkennungsmodul aufweist, das die Position der einzelnen Bediener der Anlage innerhalb der Leitwarte bestimmt,
o mit Hilfe eines Modells (50) erkennt, auf welches Zielsystem sich eine Geste bezieht, wobei das Modell (50) mittels einer ersten Komponente (51) die Leitwarte abbildet und zeigt, welche Bildschirme und/oder realen Gegenstände sich wo innerhalb der Leitwarte befinden, und
o Selektions- und Positionsinformationen an das erkannte Zielsystem zur Auswertung und Auslösung entsprechender Aktionen sendet.

2. Bedien- und Beobachtungssystem nach Anspruch 1, **dadurch gekennzeichnet, dass** ausgewählte Komponenten, Messwerte, Prozessgrößen und/oder Zustandsmeldungen der Komponenten als durch Gestik bedienbare Objekte dargestellt sind, die durch Bewegungsabläufe eines Bedieners steuerbar sind.

3. Bedien- und Beobachtungssystem nach einem der vorstehenden Ansprüche **dadurch gekennzeichnet, dass** wenigstens eine Aufnahmeeinheit vorgesehen ist, welche vorab definierte Bewegungen und Gestiken eines Bedieners aufnimmt, in ein Bewegungssignal umwandelt und das Bewegungssignal der auf dem Großbildschirm und den Bedienarbeitsplätzen installierten Software zur weiteren Verarbeitung bereitstellt.

4. Bedien- und Beobachtungssystem nach einem der vorstehenden Ansprüche, **dadurch gekennzeichnet, dass** die realen Gegenstände in der Leitwarte mit Sensoren versehen sind, welche Gesten aufnehmen, verarbeiten und zur Bewegungserkennungs- und Bewegungssteuerungssoftware zur weiteren Verarbeitung übertragen.

5. Bedien- und Beobachtungssystem nach einem der vorstehenden Ansprüche, **dadurch gekennzeichnet, dass** das Modell (50) eine zweite Komponente (52) aufweist, die ein statisches Personenmodell abbildet, in dem Identifizierungsmerkmale der Bediener der Leitwarte abgelegt sind.

6. Bedien- und Beobachtungssystem nach einem der vorstehenden Ansprüche, **dadurch gekennzeichnet, dass** das Modell (50) optional eine weitere Komponente (53) aufweist, die ein dynamisches Bewegungsmodell der Personen in der Leitwarte abbildet.

7. Bedien- und Beobachtungssystem nach einem der vorstehenden Ansprüche 5 oder 6, **dadurch gekennzeichnet, dass** mittels des Bewegungsmodells (53) und/oder eines Gesichtserkennungsmoduls eine Identifizierung der vor einem Großbildschirm befindlichen Person vorgesehen ist und in Abhängigkeit von der Identifikation der Person speziell auf die identifizierte Person zugeschnittene Sichten darstellbar sind.

8. Bedien- und Beobachtungssystem nach einem der vorstehenden Ansprüche, **dadurch gekennzeichnet, dass** sich die Darstellung der Komponenten auf dem Großbildschirm (10) in Abhängigkeit vom Standort des Bedieners verändert, durch eine Anpassung des auf Großbildschirm dem sichtbaren Inhaltes an einen sich ändernden Abstand des Bedieners vom Großbildschirm.

9. Bedien- und Beobachtungssystem nach einem der vorstehenden Ansprüche, **dadurch gekennzeichnet, dass** die Sichten, welche sensitive Informationen aufweisen, automatisch geschlossen werden, falls eine Identifikation der betreffenden Person nicht vorliegt.

10. Bedien- und Beobachtungssystem nach einem der vorstehenden Ansprüche, **dadurch gekennzeichnet, dass** wenigstens eine weitere Aufnahmeeinheit zur Aufnahme von gesprochenen Worten vorgesehen ist, die mit einer daran angeschlossenen Verarbeitungseinheit zusammenwirkt, welche aus der Aufnahme der gesprochenen Worte ein weiteres Signal erzeugt, mit dem eine Bedienung und/oder Abfrage der Komponenten, der Messwerte, der Prozessgrößen und/oder der Zustandsmeldungen der Komponenten der Anlage ausführbar ist.

11. Bedien- und Beobachtungssystem nach Anspruch 9, **dadurch gekennzeichnet, dass** dazu auf dem Großbildschirm und den Bedienarbeitsplätzen eine Spracherkennungssoftware installiert ist.

12. Bedien- und Beobachtungssystem nach Anspruch 10, **dadurch gekennzeichnet, dass** ausgewählte Komponenten, Messwerte, Prozessgrößen und/oder der Zustandsmeldungen der Komponenten als durch gesprochene Befehle bedienbare Objekte dargestellt sind.

13. Verfahren zur Bedienung von Komponenten einer technischen Anlage und zur Darstellung von Messwerten, Prozessgrößen und/oder Zustandsmeldungen der Komponenten der Anlage mittels Gestensteuerung in einer Leitwarte, auf wenigstens einem Großbildschirm und einer Vielzahl von Bedienarbeitsplätzen, auf denen die Komponenten, Messwerte, Prozessgrößen und/oder Zustandsmeldungen dargestellt werden, **dadurch gekennzeichnet, dass**
• Gesten mittels Sensoren erkannt werden,
• mit einer auf dem Großbildschirm und den Bedienarbeitsplätzen installierten Bewegungserkennungs- und Bewegungssteuerungssoftware eine Bedienung und/oder Abfrage der Komponenten, der Messwerte, der Prozessgrößen und/oder der Zustandsmeldungen der Komponenten der Anlage mittels einer Körperbewegung eines Bedieners ausgeführt wird, indem
∘die Position der einzelnen Bediener der Anlage innerhalb der Leitwarte bestimmt wird,
o mit Hilfe eines Modells (50) erkannt wird, auf welches Zielsystem sich eine Geste bezieht, wobei das Modell (50) mittels einer ersten Komponente (51) die Leitwarte abbildet und zeigt, welche realen Gegenstände, insbesondere Bildschirme, Tische, Telefone und Alarmhupen, sich wo innerhalb der Leitwarte befinden, und
∘Selektions- und Positionsinformationen an das erkannte Zielsystem zur Auswertung und Auslösung entsprechender Aktionen gesendet werden.

14. Verfahren nach Anspruch 13, **dadurch gekennzeichnet, dass** der Abstand der sich am nächsten zum Großbildschirm befindlichen Person erfasst wird und je nach Größe des Abstands der am nächsten zum Großbildschirm befindlichen Person die Anzeige des Großbildschirmes optimiert wird.

15. Verfahren nach einem der Ansprüche 13 oder 14, **dadurch gekennzeichnet, dass** die Bewegungserkennungssoftware ein Signal generiert, wenn über einen vorab festgelegten Zeitraum keine Bewegung registriert wird.

## Claims

1. Operating and observation system for a technical installation with a gesture controller for operating components of the installation and for presenting measured values, process variables and/or state messages from the components of the installation in a control room, having at least one large screen (10) and having a multiplicity of user workstations (50a-50d) for presenting the components, measured values, process variables and/or state messages, **characterized in that**
o sensors (20) are provided, which recognize gestures,
o the large screen and the user workstations have an installed piece of motion recognition and motion control software that allows operation and/or polling of the components, the measured values, the process variables and/or the state messages from the components of the installation by means of a gesture from a user by virtue of its
o having a position identification module that determines the position of the individual users of the installation within the control room,
o using a model (50) to identify the target system to which a gesture relates, wherein the model (50) uses a first component (51) to depict the control room and shows what screens and/or real items are situated where within the control room, and
∘ sending selection and position information to the identified target system for evaluation and initiation of appropriate actions.

2. Operating and observation system according to Claim 1, **characterized in that** selected components, measured values, process variables and/or state messages from the components are presented as objects that can be operated by gestures and that can be controlled by movement sequences from a user.

3. Operating and observation system according to either of the preceding claims, **characterized in that** at least one recording unit is provided that records previously defined movements and gestures from a user, converts them into a motion signal and provides the motion signal for the software installed on the large screen and the user workstations for further processing.

4. Operating and observation system according to one of the preceding claims, **characterized in that** the real items in the control room are provided with sensors that record gestures, process them and transmit them to the motion recognition and motion control software for further processing.

5. Operating and observation system according to one of the preceding claims, **characterized in that** the model (50) has a second component (52) that depicts a static personal model that stores identification features of the users of the control room.

6. Operating and observation system according to one of the preceding claims, **characterized in that** the model (50) optionally has a further component (53) that depicts a dynamic motion model for the persons in the control room.

7. Operating and observation system according to either of the preceding Claims 5 and 6, **characterized in that** the motion model (53) and/or a face recognition module is/are used to provide an identification for the person who is in front of a large screen and the identification of the person can be taken as a basis for presenting views tailored specifically to the identified person.

8. Operating and observation system according to one of the preceding claims, **characterized in that** the presentation of the components on the large screen (10) changes on the basis of the location of the user, by virtue of the content that is visible on the large screen being adjusted to suit a changing distance of the user from the large screen.

9. Operating and observation system according to one of the preceding claims, **characterized in that** the views that have sensitive information are automatically closed if there is no identification for the relevant person.

10. Operating and observation system according to one of the preceding claims, **characterized in that** at least one further recording unit for recording spoken words is provided that interacts with a processing unit connected thereto that takes the recording of the spoken words and produces a further signal that can be used to execute operation and/or polling of the components, the measured values, the process variables and/or the state messages from the components of the installation.

11. Operating and observation system according to Claim 9, **characterized in that** a piece of voice recognition software is installed for this purpose on the large screen and the user workstations.

12. Operating and observation system according to Claim 10, **characterized in that** selected components, measured values, process variables and/or state messages from the components are presented as objects that can be operated by spoken commands.

13. Method for operating components of a technical installation and for presenting measured values, process variables and/or state messages from the components of the installation by means of a gesture controller in a control room on at least one large screen and a multiplicity of user workstations on which the components, measured values, process variables and/or state messages are presented, **characterized in that**
∘ gestures are recognized by means of sensors,
∘ a piece of motion recognition and motion control software installed on the large screen and the user workstations is used to execute operation and/or polling of the components, the measured values, the process variables and/or the state messages from the components of the installation by means of a body movement from a user by virtue of
o the position of the individual users of the installation within the control room being determined,
∘ a model (50) being used to identify the target system to which a gesture relates, wherein the model (50) uses a first component (51) to depict the control room and shows what real items, particularly screens, tables, telephones and alarm horns, are situated where within the control room, and
∘ selection and position information being sent to the identified target system for evaluation and initiation of appropriate actions.

14. Method according to Claim 13, **characterized in that** the distance of the person situated closest to the large screen is detected and, depending on the magnitude of the distance of the person situated closest to the large screen, the display of the large screen is optimized.

15. Method according to either of Claims 13 and 14, **characterized in that** the motion recognition software generates a signal when no movement is registered over a previously stipulated period.

## Revendications

1. Système de maniement et de surveillance d'un équipement technique à commande gestuelle, destiné à manier les composants de l'équipement et à représenter des valeurs mesurées, grandeurs de procédé et/ou messages d'état des composants de l'équipement dans une salle de contrôle, comprenant au moins un écran de grande taille (10) et comprenant une pluralité de postes de travail de maniement (50a-50d) destinés à la représentation des composants, valeurs mesurées, grandeurs de procédé et/ou messages d'état, **caractérisé en ce que**
* il existe des capteurs (20) qui reconnaissent les gestes,
* un logiciel de reconnaissance de mouvement et de maniement par mouvement est installé sur l'écran de grande taille et sur les postes de travail de maniement, lequel permet un maniement et/ou une interrogation des composants, des valeurs mesurées, des grandeurs de procédé et/ou des messages d'état des composants de l'équipement par le biais d'un geste d'un opérateur, **en ce qu'**il
- possède un module de reconnaissance de position qui détermine la position des opérateurs individuels de l'équipement à l'intérieur de la salle de contrôle,
- reconnaît à l'aide d'un modèle (50) le système cible auquel se rapporte un geste, le modèle (50) représentant la salle de contrôle au moyen d'un premier composant (51) et indiquant quels écrans et/ou quels objets réels se trouvent à quels endroits à l'intérieur de la salle de contrôle, et
- envoie des informations de sélection et de position au système cible reconnu en vue de leur interprétation et du déclenchement d'actions correspondantes.

2. Système de maniement et de surveillance selon la revendication 1, **caractérisé en ce que** des composants, valeurs mesurées, grandeurs de procédé et/ou messages d'état des composants sélectionnés sont également représentés sous la forme d'objets maniables par des gestes, lesquels peuvent être commandés par des séquences de mouvements d'un opérateur.

3. Système de maniement et de surveillance selon l'une des revendications précédentes, **caractérisé en ce qu'**il existe au moins une unité d'enregistrement qui enregistre des mouvements et des gestes définis à l'avance d'un opérateur, les convertit en un signal de mouvement et met le signal de mouvement à disposition du logiciel installé sur l'écran de grande taille et sur les postes de travail de maniement en vue d'un traitement ultérieur.

4. Système de maniement et de surveillance selon l'une des revendications précédentes, **caractérisé en ce que** les objets réels dans la salle de contrôle sont munis de capteurs, lesquels enregistrent les gestes, les traitent et les transmettent au logiciel de reconnaissance de mouvement et de maniement par mouvement en vue d'un traitement ultérieur.

5. Système de maniement et de surveillance selon l'une des revendications précédentes, **caractérisé en ce que** le modèle (50) possède un deuxième composant (52) qui représente un modèle de personne statique dans lequel sont stockées les caractéristiques d'identification des opérateurs de la salle de contrôle.

6. Système de maniement et de surveillance selon l'une des revendications précédentes, **caractérisé en ce que** le modèle (50) possède, en option, un composant supplémentaire (53) qui représente un modèle de mouvement dynamique des personnes dans la salle de contrôle.

7. Système de maniement et de surveillance selon l'une des revendications précédentes 5 ou 6, **caractérisé en ce qu'**il est prévu une identification de la personne se trouvant devant un écran de grande taille au moyen du modèle de mouvement (53) et/ou d'un module de reconnaissance faciale et, suivant l'identification de la personne, des vues spécialement personnalisées pour la personne identifiée peuvent être représentées.

8. Système de maniement et de surveillance selon l'une des revendications précédentes, **caractérisé en ce que** la représentation des composants sur l'écran de grande taille (10) varie en fonction de l'emplacement de l'opérateur par une adaptation du contenu pouvant être visualisé sur l'écran de grande taille à une distance variable entre l'opérateur et l'écran de grande taille.

9. Système de maniement et de surveillance selon l'une des revendications précédentes, **caractérisé en ce que** les vues qui présentent des informations sensibles sont automatiquement fermées dans le cas où il n'existe pas une identification de la personne concernée.

10. Système de maniement et de surveillance selon l'une des revendications précédentes, **caractérisé en ce qu'**il existe au moins une unité d'enregistrement supplémentaire destinée à enregistrer des mots prononcés, laquelle interagit avec une unité de traitement qui y est raccordée, laquelle génère un signal supplémentaire à partir de l'enregistrement des mots prononcés, lequel permet d'exécuter un maniement et/ou une interrogation des composants, des valeurs mesurées, des grandeurs de procédé et/ou des messages d'état des composants de l'équipement.

11. Système de maniement et de surveillance selon la revendication 9, **caractérisé en ce qu'**un logiciel de reconnaissance vocale est installé à cet effet sur l'écran de grande taille et les postes de travail de maniement.

12. Système de maniement et de surveillance selon la revendication 10, **caractérisé en ce que** des composants, valeurs mesurées, grandeurs de procédé et/ou messages d'état des composants sélectionnés sont également représentés sous la forme d'objets maniables par des instructions vocales.

13. Procédé pour manier des composants d'un équipement technique et pour représenter des valeurs mesurées, grandeurs de procédé et/ou messages d'état des composants de l'équipement au moyen d'une commande gestuelle dans une salle de contrôle, sur au moins un écran de grande taille et une pluralité de postes de travail de maniement sur lesquels sont représentés les composants, valeurs mesurées, grandeurs de procédé et/ou messages d'état, **caractérisé en ce que**
* les gestes sont reconnus au moyen de capteurs,
* un maniement et/ou une interrogation des composants, des valeurs mesurées, des grandeurs de procédé et/ou des messages d'état des composants de l'équipement au moyen d'un mouvement corporel d'un opérateur sont exécutés par un logiciel de reconnaissance de mouvement et de maniement par mouvement installé sur l'écran de grande taille et sur les postes de travail de maniement, **en ce que**
- la position des opérateurs individuels de l'équipement à l'intérieur de la salle de contrôle est déterminée,
- le système cible auquel se rapporte un geste est reconnu à l'aide d'un modèle (50), le modèle (50) représentant la salle de contrôle au moyen d'un premier composant (51) et indiquant quels objets réels, notamment écrans, tables, téléphones et sirènes d'alarme, se trouvent à quels endroits à l'intérieur de la salle de contrôle, et
- des informations de sélection et de position sont envoyées au système cible reconnu en vue de leur interprétation et du déclenchement d'actions correspondantes.

14. Procédé selon la revendication 13, **caractérisé en ce que** la distance de la personne qui se trouve le plus près de l'écran de grande taille est détectée et l'affichage de l'écran de grande taille est optimisé en fonction de la valeur de la distance de la personne qui se trouve le plus près de l'écran de grande taille.

15. Procédé selon l'une des revendications 13 ou 14, **caractérisé en ce que** le logiciel de reconnaissance de mouvement génère un signal si aucun mouvement n'est enregistré pendant une période définie à l'avance.
